(19) Europäisches Patentamt
European Patent Office
Office européen des brevets

(11) Veröffentlichungsnummer: **0 013 922**
**A2**

(12) # EUROPÄISCHE PATENTANMELDUNG

(21) Anmeldenummer: **80100156.1**

(22) Anmeldetag: **14.01.80**

(51) Int. Cl.³: **D 06 P 3/62,** D 06 P 1/02

(30) Priorität: **19.01.79 DE 2902035**

(43) Veröffentlichungstag der Anmeldung: **06.08.80**
**Patentblatt 80/16**

(84) Benannte Vertragsstaaten: **BE CH DE FR GB IT NL SE**

(71) Anmelder: **CASSELLA Aktiengesellschaft, Hanauer Landstrasse 526, D-6000 Frankfurt am Main 61 (DE)**

(72) Erfinder: **Bauer, Wolfgang, Dr., Masurenstrasse 6, D-6457 Maintal 3 (DE)**
Erfinder: **Dickmanns, Heinz, Lauterbacher Strasse 8, D-6000 Frankfurt am Main 61 (DE)**
Erfinder: **Osterloh, Fritz, Dr., Egmondtstrasse 18, D-6232 Bad Soden (DE)**
Erfinder: **Ribka, Joachim, Dr., Rügener Strasse 4, D-6050 Offenbach-Bürgel (DE)**
Erfinder: **Lauer, Robert, Meerholzer Strasse 48, D-6000 Frankfurt am Main 61 (DE)**

(74) Vertreter: **Urbach, Hans-Georg, Dr. et al, Hanauer Landstrasse 526, D-6000 Frankfurt am Main 61 (DE)**

(54) **Verfahren zum Färben und Bedrucken von hydroxylgruppenhaltigen Fasermaterialien.**

(57) Das Verfahren zum Färben und Bedrucken von hydroxylgruppenhaltigen, natürlichen oder synthetischen Fasermaterialien ist dadurch gekennzeichnet, dass bei dem Färbeprozeß eine wäßrige Färbeflotte und bei dem Druckprozeß eine wäßrige Druckpaste eines alkalistabilen metallfreien oder metallhaltigen Monoazo-, Disazo-, Tris- und Polyazodirektfarbstoffs, der mindestens eine, in der Regel 1 bis 4, vorzugsweise 2 bis 3, aromatische Hydroxyl- und/oder Enolgruppen und zusätzlich mindestens eine, in der Regel 1 bis 6, vorzugsweise 2 bis 5, wasserlöslich machende Gruppen enthält, mit einem pH-Wert von gleich oder größer als 11,5, vorzugsweise 12 bis 13,1, verwendet wird.

EP 0 013 922 A2

ACTORUM AG

Ref. 3138
Dr.Eu/Ll

Verfahren zum Färben und Bedrucken von hydroxylgruppenhaltigen Fasermaterialien

Die Erfindung betrifft ein Verfahren zum Färben und Bedrucken von hydroxylgruppenhaltigen natürlichen oder synthetischen Fasermaterialien, wie z.B. Baumwolle, Regeneratcellulose oder Papier mit Direktfarbstoffen der Azoreihe.

Substantive oder Direktfarbstoffe werden üblicherweise aus neutraler oder schwach sodaalkalischer Lösung (pH 8 bis 9) auf Textilien aus Cellulose gefärbt. Die Applikationsmethoden erstrecken sich dabei auf alle textilen Verarbeitungsstadien: Loses Material (Flocke), Garn, Maschenware, Gewebe. Während die Färbeweise in "langer Flotte" 1 : 5 bis 1 : 40 mit wasserlöslichen, substantiven Azofarbstoffen praktisch problemlos verläuft, ist die kontinuierliche Färbemethode bis jetzt infolge bestimmter Eigenschaften dieser Farbstoffgruppe nur mit Einschränkung praktikabel:

1. Die meisten substantiven Farbstoffe haben eine relativ geringe Wasserlöslichkeit, die sie zur Herstellung tiefer Farbtöne vom kontinuierlichen Färbeprozeß in vielen Fällen ausschließt.

2. Die Fixierung des Farbstoffs auf dem Textilgut erfolgt im Kontinueprozeß durch Behandlung mit gesättigtem Dampf bei 100°C. Im Interesse einer möglichst hohen Produktionsgeschwindigkeit liegt es, Farbstoffe mit möglichst hoher Fixiergeschwindigkeit auszuwählen. Die Fixiergeschwindigkeit der meisten substantiven Farbstoffe während des kurzen Dämpfprozesses (1 bis 3 Minuten) ist jedoch unzureichend, insbesondere bei tiefen Farbtönen, so daß entweder eine unwirtschaftliche Farbstoffminderausbeute bei höherer Produktionsgeschwindigkeit in Kauf zu nehmen ist oder aber, ebenfalls unwirtschaftlich, zur Erzielung einer vollen Farbausbeute mit verringerter Produktionsgeschwindigkeit gearbeitet werden muß.

3. Für die kontinuierliche Färbeweise müssen große Farbstoffmengen zubereitet werden. Es besteht daher lebhafte Nachfrage nach nicht staubenden, möglichst flüssigen Farbstoffen. Diese Nachfrage konnte bisher nicht oder nur in Einzelfällen wegen der unter nach vorstehendem Punkt 1 erwähnten geringen Wasserlöslichkeit substantiver Farbstoffe befriedigt werden.

Diese und andere Schwierigkeiten lassen sich vermeiden, wenn erfindungsgemäß zur Durchführung des Färbeprozesses eine wäßrige Färbeflotte bzw. zur Durchführung des Druckprozesses eine wäßrige Druckpaste eines alkalistabilen metallfreien oder metallhaltigen Monoazo-, Disazo-, Tris- und Polyazodirektfarbstoffs, der mindestens eine, in der Regel 1 bis 4, vorzugsweise 2 bis 3, aromatische Hydroxyl- und/oder Enolgruppen und zusätzlich mindestens eine, in der Regel 1 bis 6, vorzugsweise 2 bis 5, wasserlöslich machende Gruppen enthält, mit einem pH-Wert von gleich oder größer als 11,5, vorzugsweise von 12 bis 13,1, verwendet wird. Wasserlöslich machende Gruppen sind insbesondere Carboxy- und/oder Sulfogruppen, die im allgemeinen in Salzform, insbesondere in Form der Natriumsalze, vorliegen. Bei den aromatischen Hydroxylgruppen handelt es sich vorzugsweise um solche der Phenol- und/oder Naphtholreihe.

Die stark alkalischen pH-Werte gleich oder größer als 11,5

werden mittels teriärer Alkaliphosphate und/oder Alkalimetasilikate und/oder vorzugsweise Alkalihydroxide eingestellt. Ein Beispiel für ein geeignetes tertiäres Alkaliphosphat ist das tert. Natriumphosphat $Na_3PO_4.12H_2O$ bzw. das entsprechende Kaliumphosphat. Ein Beispiel für ein geeignetes Alkalimetasilikat ist das sogenannte Natriummonosilikat $Na_2SiO_3.4H_2O$ bzw. $Na_2SiO_3.9H_2O$. Beispiele für geeignete Alkalihydroxide sind Lithium- und/oder Natrium- und/oder Kaliumhydroxid, von denen das Natriumhydroxid bevorzugt ist.

Zur Herstellung der Färbeflotte werden Azodirektfarbstoff oder ein Gemisch verschiedener Azodirektfarbstoffe, Wasser, tertiäres Alkaliphosphat und/oder Alkalimetasilikat und/oder Alkalihydroxid miteinander vermischt, bis der Farbstoff in Lösung gegangen ist. Diese Mischung erfolgt normalerweise bei Temperaturen von Raumtemperatur bis ca. 50°C, vorzugsweise 20 bis 25°C. Außerdem können auch weitere noch zu nennende Zusatzstoffe (hydrotrope Verbindungen, Tenside, Puffer) zugemischt werden. Ein Pulverfarbstoff wird unter Rühren in Wasser eingetragen, wobei die alkalisch reagierenden, den pH-Wert von über 11,5 einstellenden Verbindungen oder die anderen Zusatzstoffe vor, während oder nach der Farbstoffzugabe dem Wasser zugefügt werden. Die Mengen von Wasser, Farbstoff und alkalisch reagierender, den pH-Wert von gleich oder größer als 11,5 einstellender Verbindung wird dabei so gewählt, daß die fertige Färbeflotte den Farbstoff in der gewünschten Konzentration enthält und einen pH-Wert von gleich oder größer als 11,5, insbesondere von 12 bis 13, besitzt. Bei der Herstellung der Färbeflotten kann man auch von wäßrigen Farbstoffpasten ausgehen. Es ist auch möglich, zunächst konzentrierte wäßrige Stammlösungen der Farbstoffe mit einem Farbstoffgehalt von 5 bis 50 Gew.%, vorzugsweise 10 bis 30 Gew.%, herzustellen, die bereits einen stark alkalischen pH-Wert von z.B. über 12 besitzen, und dann

diese Stammlösungen mit Wasser auf die Konzentration des Färbebades zu verdünnen. Bei der Herstellung solcher konzentrierter wäßriger Stammlösungen ist es im allgemeinen zweckmäßig, an sich bekannte hydrotrope Verbindungen oder deren Gemische zuzusetzen, beispielsweise aus der Reihe der hydrotropen Salze, wie Natriumbenzoat, benzolsulfonsaures Natrium, p-tol-uolsulfonsaures Natrium, N-benzylsulfanilsaures Natrium. Beispiele für weitere geeignete hydrotrope Verbindungen sind:
amidische carbonylgruppenhaltige Verbindungen, beispielsweise Harnstoff, Formamid, Dimethylformamid, Acetamid, N-Methylpyrrolidon, ε-Caprolactam; ferner mit Wasser mischbare ein- oder mehrwertige Alkohole, beispielsweise Methanol, Äthanol,n-Propanol, Isopropanol, Äthylenglykol, Diäthylenglykol, Triäthylenglykol, Polyäthylenglykol, Polypropylenglykol, Polyvinylalkohol, 1,2-Propylenglykol, 1,3-Propylenglykol, 2,3-Butylenglykol, 1,4-Butylenglykol, 2,2-Diäthyl-propandiol(1,3), 1,6-Hexylenglykol, 3-Methyl- und 2-Methyl-hexylenglykol(1,6), 2-Methyl-pentandiol(2,4), 2-Äthyl-hexandiol(1,3), 2,2-Dimethyl-hexandiol(1,3), Glycerin, Pentaerithrit, Mannit, Sorbit, Dextrin; ferner Äthylenglykolalkyläther, Diäthylenglykolalkyläther, Triäthylenglykolalkyläther, Polyäthylenglykolalkyläther, jeweils insbesondere mit 1 bis 4 C-Atomen im Alkylrest.

Hydrotrope Verbindungen sind beispielsweise beschrieben bei H. Rath + S. Müller, Melliand Textilberichte 40, 787 (1959), oder bei E.H. Daruwalla in K. Venkataraman, "The Chemistry of Synthetic Dyes", Vol. VII, Seiten 86 bis 92 (1974) und in der dort zitierten Literatur.

Bevorzugte hydrotrope Verbindungen sind Diäthylenglykol, Triäthylenglykol, Äthylenglykolmonoalkyläther, Diäthylenglykolmonoalkyläther, Triäthylenglykolmonoalkyläther mit jeweils 1 bis 2 C-Atomen im Alkylrest, Harnstoff,

ε-Amino-capronat (aus ε-Caprolactam) sowie deren Gemische. Normalerweise enthalten die konzentrierten Stammlösungen 5 bis 40 Gew.%, vorzugsweise 10 bis 35 Gew.% einer oder mehrerer hydrotroper Verbindungen.

Bei der Herstellung der Stammlösungen oder Färbeflotten kann auch zusätzlich ein an sich bekanntes Tensid oder ein Gemisch derartiger Tenside zugegen sein. Als derartige Tenside kommen Aniontenside und/oder Amphotenside bzw. nicht-ionogene Tenside in Betracht, wie sie z.B. beschrieben sind in Ullmanns Enzyklopädie der Technischen Chemie, 3. Auflage, Band 16, Seiten 724 bis 748 (1965), J.L. Moillet, B. Collie und W. Black in "Surface Chemistry", 2. Auflage, Kap. 10 bis 15, E.H. Daruwalla in K. Venkataraman: "The Chemistry of Synthetic Dyes", Vol. VII, Seiten 86 bis 92 (1974).

Durch den zusätzlichen Gehalt an einer hydrotropen Verbindung und/oder eines Tensids lassen sich die Lagerstabilität der Stammlösung bzw. die Löslichkeit des Farbstoffs weiter verbessern.

Bei der Herstellung von erfindungsgemäß zu verwendenden Färbeflotten aus schwer bis sehr schwer löslichen Pulverfarbstoffen kann der Zusatz eines oder mehrerer hydrotroper Mittel und/oder eines oder mehrerer Tenside erforderlich sein, um eine ausreichende Löslichkeit sicherzustellen.

Die Färbeflotten, Druckpasten oder Stammlösungen können auch im stark alkalischen Bereich puffernde Substanzen, beispielsweise Aminoalkancarbonsäuren, wie Aminoessigsäure, ß-Aminopropionsäure, γ-Aminobuttersäure, ε-Aminocapronsäure enthalten. Ferner können die Färbeflotten, Druckpasten oder Stammlösungen Komplexbildner, beispielsweise Nitrilotriessigsäure oder Äthylendiamin-tetraessigsäure enthalten.

Für das erfindungsgemäße Verfahren sind solche Direktfarbstoffe der Azoreihe geeignet, die beispielsweise einen oder mehrere Reste folgender hydroxylgruppenhaltiger Farbstoffvorprodukte enthalten:

Phenol, 2-Methylphenol, 3-Methylphenol, 4-Methylphenol, 3-Methoxyphenol, 2-Hydroxybenzolsulfonsäure, 3-Hydroxybenzolsulfonsäure, 4-Hydroxybenzolsulfonsäure, 1,3-Dihydroxybenzol, 1,3-Dihydroxy-5-methylbenzol, 1,3-Dihydroxy-benzol-5-sulfonsäure, 1-Amino-3-hydroxybenzol, 1-(2'-Methylphenylamino)-3-hydroxybenzol, 1-(Phenylamino)-3-hydroxybenzol, 3-Aminophenol-4-sulfonsäure, 3-Carboxymethylaminophenol, 2-Hydroxybenzoesäure, 2-Hydroxy-3-methylbenzoesäure, 2-Hydroxy-4-methylbenzoesäure, 2-Hydroxy-5-methylbenzoesäure, 2-Hydroxy-5-sulfobenzoesäure, 2-Hydroxy-5-aminobenzoesäure, 2-Hydroxy-3-aminobenzoesäure, 1-Hydroxynaphthalin, 1,6-Dihydroxynaphthalin, 1-Hydroxynaphthalin-4-sulfosäure, 1-Hydroxynaphthalin-3,6-disulfosäure, 1-Hydroxynaphthalin-5-, -6- und -7-sulfosäure, 2-Hydroxynaphthalin, 2-Hydroxy-7-aminonaphthalin, 2-Hydroxynaphthalin-3-carbonsäure, 2-Hydroxynaphthalin-3-carbonsäureanilid, 2-Hydroxynaphthalin-6-,-7- und -8-sulfonsäure, 2-Hydroxynaphthalin-3,6-disulfonsäure, 2-Hydroxynaphthalin-6,8-disulfonsäure, 1-Hydroxynaphthalin-3,6,8-trisulfonsäure, 1-Hydroxynaphthalin-3,8-disulfonsäure, 1-Amino-8-hydroxynaphthalin-4-sulfonsäure, 1-Amino-8-hydroxynaphthalin-3,6-disulfosäure, 1-Amino-8-hydroxynaphthalin-4,6-disulfosäure, 1-Amino-8-hydroxynaphthalin-2,4-disulfosäure, 1-Acetylamino-8-hydroxynaphthalin-3,6-disulfosäure, 1-Hydroxy-8-chlornaphthalin-3,6-disulfosäure, 1-Hydroxy-8-äthoxynaphthalin-3,6-disulfosäure, 1,8-Dihydroxynaphthalin-3,6-disulfosäure, 1,8-Dihydroxynaphthalin-4-sulfonsäure, 1,7-Dihydroxynaphthalin-3-sulfosäure, 2-Amino-8-hydroxynaphthalin-6-sulfonsäure, 2-Amino-8-hydroxynaphthalin-3,6-disulfonsäure, 2-Methylamino-8-hydroxynaphthalin-6-sulfonsäure, 2-Dimethylamino-8-hydroxynaphthalin-6-sulfonsäure, 2-Carboxymethylamino-8-hydroxynaphthalin-6-sulfonsäure, 2-Acetylamino-8-hydroxynaphthalin-6-sulfonsäure, 2-Benzoylamino-8-hydroxynaphthalin-6-sulfonsäure, 2-Phenylamino-8-hydroxynaphthalin-6-sulfonsäure, 3-Amino-8-hydroxynaphthalin-6-sulfonsäure, 3-Acetylamino-8-hydroxynaphthalin-6-sulfonsäure, 3-Carboxymethylamino-8-hydroxynaphthalin-6-sulfonsäure, 3-Benzoylamino-8-hydroxynaphthalin-6-sulfonsäure, 3-Phenylamino-8-hydroxynaphthalin-6-sulfonsäure, 6,6'-Bis-(1-hydroxy-3-sulfonaphthyl)-harnstoff (J-Säure-Harnstoff), 6,6'-Bis-(1-hydroxy-3-sulfonaphthyl)-amin (J-Säure-imid), Acetessiganilid, Acetessig-2-methoxyanilid, Acetessig-4-methoxyanilid, Acetessig-3-sulfoanilid, Acetessig-4-sulfoanilid, Acetessig-4-carboxyanilid, Acetessig-2-methoxy-4-sulfoanilid, Acetessig-2-methoxy-5-methyl-4-sulfoanilid, Acetessig-2,4-dimethoxy-5-sulfoanilid, Acetessig-2,5-dimethoxy-4-sulfoanilid, Acetessig-naphthylamid(1), Acetessig-naphthylamid(2), Acetessig-4-sulfonaphthylamid(1), Acetessig-6-sulfonaphthylamid(1), Acetessig-6-sulfonaphthylamid(2), 1-Phenyl-3-methyl-pyrazolon(5), 1-(4'-Sulfophenyl)-3-methylpyrazolon(5), 1-(2',5'-Dichlor-4'-sulfophenyl)-3-methyl-pyrazolon(5), 1-Phenyl-pyrazolon(5)-3-carbonsäure, 1-(4'-Sulfophenyl)-pyrazolon(5)-3-carbonsäure, 4-Methyl-3-cyano-6-hydroxypyridon(2), 4-Methyl-6-hydroxypyridon(2)-3-sulfonsäure, 1,4-Dimethyl-3-cyano-6-hydroxypyridon(2), 1,4-Dimethyl-6-hydroxypyridon(2)-3-sulfonsäure.

Für das erfindungsgemäße Verfahren eignen sich beispielsweise folgende, im Colour Index aufgeführten hydroxygruppenhaltigen und/oder enolgruppenhaltigen, metallfreien oder metallhaltigen Monoazo-, Disazo-, Trisazo- und Polyazofarbstoffe der Direktfarbstoffreihe:

CI Direct Yellow 8, Yellow 22, Yellow 18, Yellow 27, Green 28, Red 48, Red 51, Red 47, Red 20, Red 3, Red 70, Brown 30, Yellow 14, Orange 17, Brown 80, Orange 18, Brown 18, Blue 84, Orange 31, Black 30, Violet 39, Violet 28, Blue 31, Blue 3, Blue 21, Blue 27, Blue 25, Blue 60, Blue 231, Blue 14, Blue 53, Violet 13,

Green 57, Blue 8, Blue 35, Blue 36, Blue 9, Blue 12, Blue 50, Blue 65, Blue 22, Blue 45, Blue 10, Blue 152, Violet 37, Blue 4, Blue 15, Blue 23, Blue 1, Blue 215, Red 148, Yellow 15, Brown 148, Red 120, Violet 83, Yellow 26, Green 55, Red 101, Red 75, Violet 6, Violet 62, Red 181, Red 57, Red 6, Green 11, Red 16, Black 51, Violet 57, Blue 67, Blue 116, Red 189, Orange 5, Orange 90, Red 174, Yellow 33, Red 79, Red 31, Violet 14, Red 149, Orange 26, Orange 29, Orange 102, Red 23, Red 4, Red 14, Orange 108, Red 62, Red 73, Red 24, Red 26, Red 72, Red 54, Red 36, Green 20, Blue 39, Red 50, Black 241, Black 9, Black 2, Black 21, Black 80, Blue 33, Blue 157, Brown 52, Black 24, Blue 26, Blue 63, Blue 30, Blue 34, Black 48, Green 59, Green 26, Blue 82, Blue 148, Blue 186, Blue 71, Blue 72, Blue 74, Black 49, Black 56, Blue 239, Black 103, Black 74, Blue 78, Blue 70, Blue 69, Blue 81, Blue 75, Blue 83, Green 33, Orange 94, Black 19, Black 28, Black 22, Black 32, Blue 176, Blue 175, Blue 162, Blue 159, Red 80, Red 194, Red 32, Black 75, Black 38, Blue 2, Brown 95, Brown 2, Blue 6, Green 1, Black 4.

Ferner eignen sich von 2-(4'-Aminophenyl)-5-(bzw. 6)-amino-benzimidazol abgeleitete, hydroxygruppenhaltige Farbstoffe, beispielsweise die der folgenden Formeln:

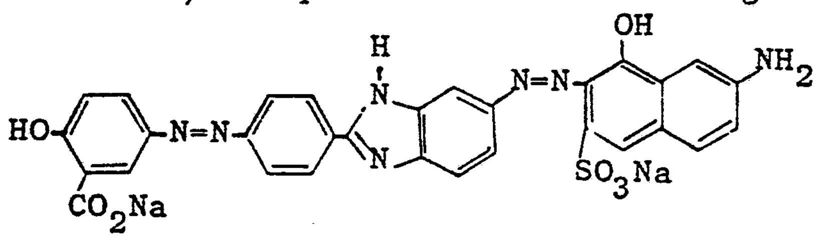

(I)

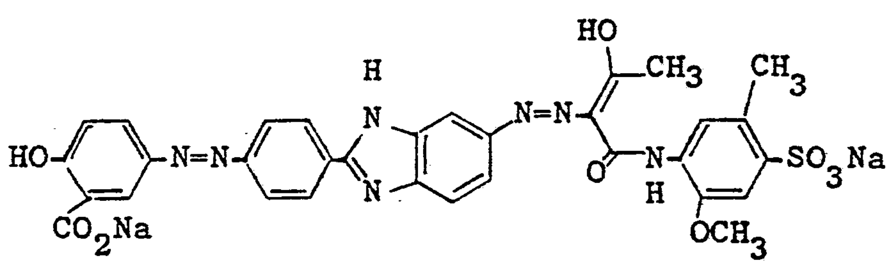

(II)

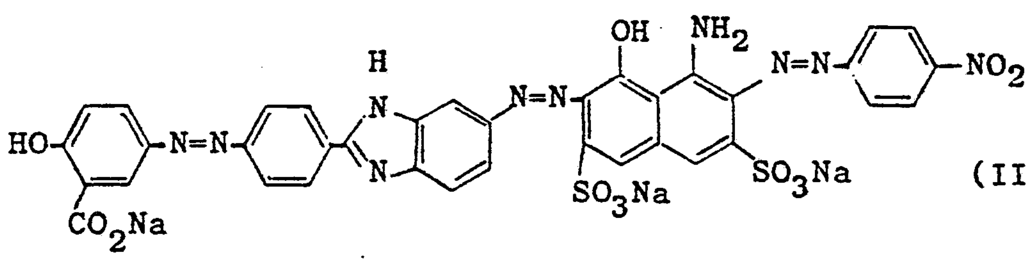

(III)

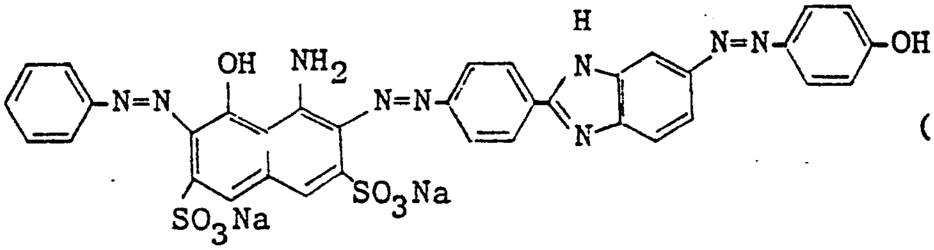

(IV)

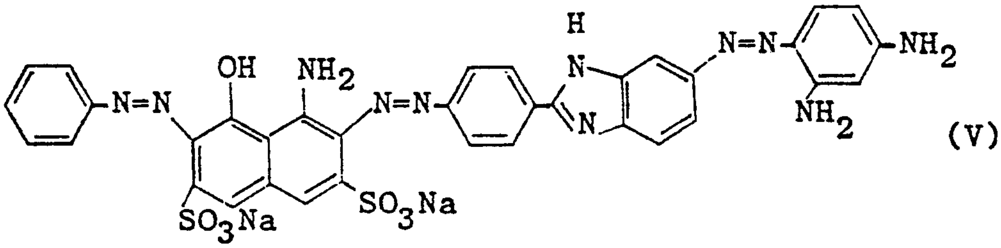

(V)

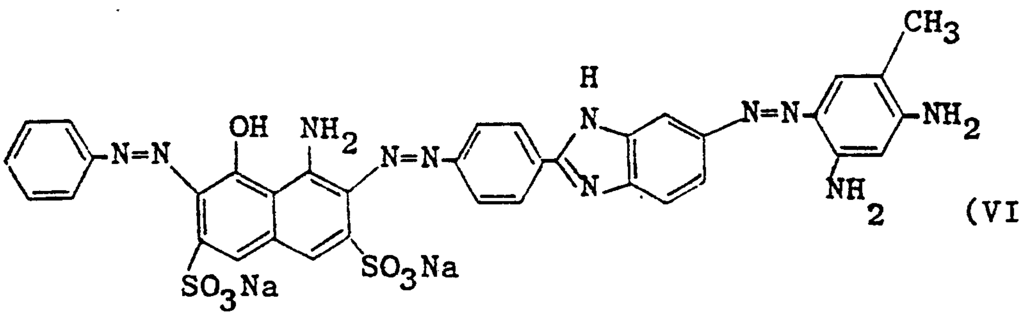

(VI)

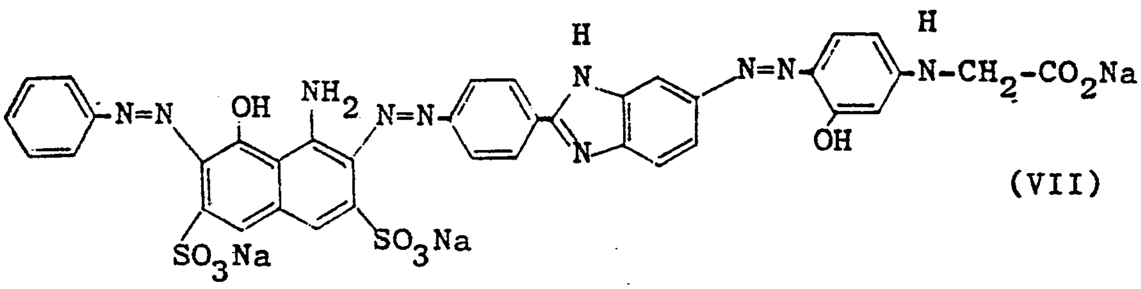

(VII)

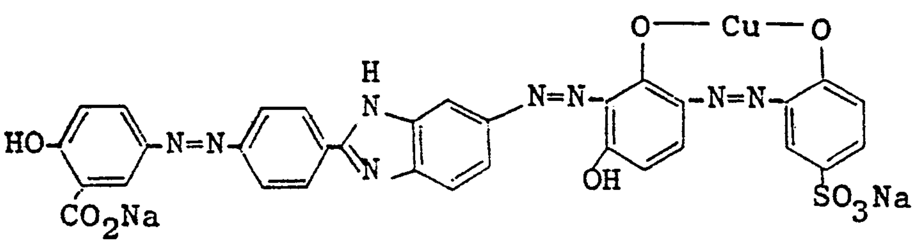

(VIII)

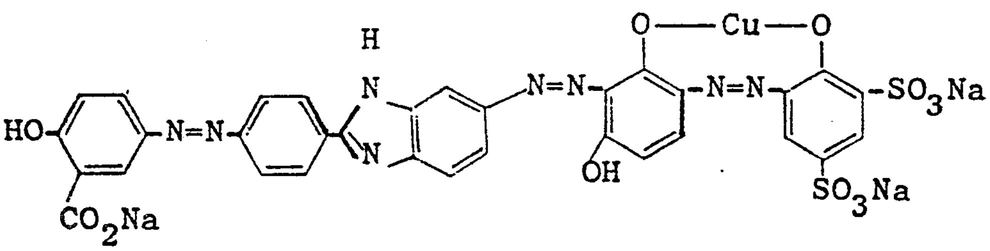

(IX)

0013922
Ref. 3138

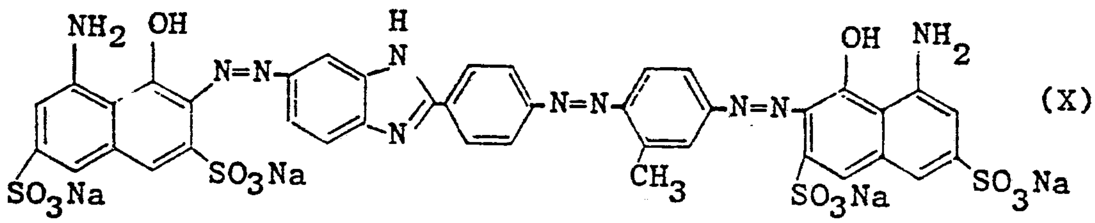

(X)

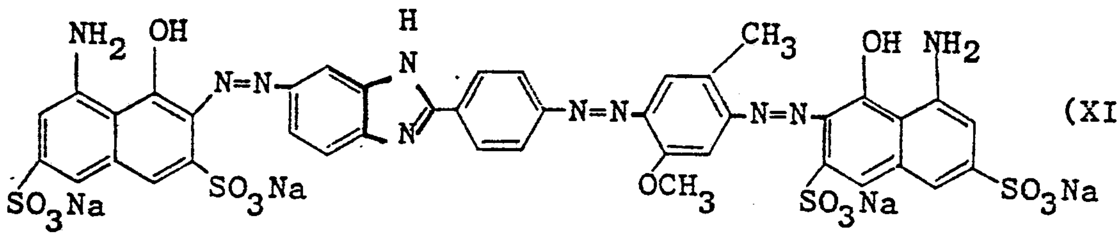

(XI)

Bevorzugte Disazodirektfarbstoffe besitzen mindestens zwei, insbesondere 2 bis 4, aromatische und/oder enolische Hydroxylgruppen und 2 bis 4 wasserlöslich machende Gruppen. Bevorzugte Disazofarbstoffe sind z.B. die im Colour-Index aufgeführten Disazofarbstoffe der Direktfarbstoffreihe: C.I. Direct Blue 1, Black 51, Blue 15, Blue 10, Blue 22, Blue 25, Blue 14, Blue 53, Red 23 , Brown 2, Blue 2, Blue 6, Brown 80, Orange 18, Blue 84, Red 79, ferner der Farbstoff der Formel I.

Bevorzugte Trisazodirektfarbstoffe besitzen mindestens eine, insbesondere eine oder zwei, aromatische und/oder enolische Hydroxylgruppe und 2 bis 4, insbesondere 2 oder 3, wasserlöslich machende Gruppen. Bevorzugte Trisazofarbstoffe sind z.B. die im Colour-Index aufgeführten Trisazofarbstoffe der Direktfarbstoffreihe: C.I. Direct Black 38, Green 1, Black 4, Brown 95, Brown 52, Green 20, ferner die Farbstoffe der Formeln III bis XI.

Bevorzugte Tetrakisazodirektfarbstoffe besitzen mindestens eine, insbesondere 1 bis 4, aromatische oder enolische Hydroxylgruppe und mindestens 2, insbesondere 2 bis 5, wasserlöslich machende Gruppen. Bevorzugte Tetrakisazodirektfarbstoffe sind z.B. die im Colour-Index aufgeführten Tetrakisfarbstoffe der

Direktfarbstoffreihe: C.I. Direct Black 19, Black 28, Black 22, Black 32, Blue 175, Blue 176, Red 80, Black 75 sowie der im folgenden Beispiel 1 aufgeführte Farbstoff.

Wäßrige Druckpasten mit einem pH-Wert von gleich oder größer als 11,5 werden unter Verwendung alkalistabiler Verdickungsmittel wie z.B. Weizenstärke, Britishgum oder Gummiverdickung hergestellt.

Besonders günstig ist das erfindungsgemäße Färbeverfahren bei solchen halb- und vollkontinuierlichen Färbeprozessen, bei denen Cellulosefasern mit Klotzflotten fouladiert werden, beispielsweise beim pad-jig-, pad-roll-, Kaltverweil-, pad-steam-, pad-salt-Verfahren.

Besonders bevorzugte Färbeverfahren sind kontinuierliche Färbeprozesse, beispielsweise das pad-steam- und pad-salt-Verfahren. Insbesondere bei vollkontinuierlichen Färbeprozessen, z.B. dem pad-steam- und pad-salt-Verfahren, bietet das erfindungsgemäße Verfahren den überraschenden technischen Vorteil, daß wesentlich geringere Fixier- und Dämpfzeiten erforderlich sind, um optimale Farbausbeuten zu erzielen. In der Zeiteinheit kann deshalb nach dem erfindungsgemäßen Verfahren bei gleichem Energieaufwand wesentlich mehr Material gefärbt werden als nach herkömmlichen Verfahren, bei denen sodaalkalische Färbeflotten zum Einsatz kommen.

Ein weiterer überraschender technischer Vorteil besteht darin, daß sich die Löslichkeit von hydroxylgruppenhaltigen und/oder enolgruppenhaltigen metallfreien oder metallhaltigen Azo-Direktfarbstoffen bei Temperaturen von -10°C bis +50°C durch Einstellen von pH-Werten gleich oder größer als 11,5 in vielen Fällen um einen Faktor größer als 4 bis 7 verbessern läßt, so daß sich auch solche schwer löslichen Direktfarbstoffe der Disazo-, Trisazo- und vor allem Polyazofarbstoffreihe mit hohem Molekulargewicht in so konzentrierte Färbeflotten überführen lassen, daß auch bei

kontinuierlichen Färbeverfahren egale Färbungen mit hoher Farbtiefe erzielt werden, bei denen dies bisher noch nicht möglich war.

In den nachfolgenden Beispielen sind sofern nichts anderes angegeben, Prozente in Gewichtsprozenten und Temperaturen in Grad Celcius angegeben.

Beispiel 1

100 g des handelsüblichen, 46%igen Pulverfarbstoffs COTONEROL BRC hochkonzentriert der Formel XII

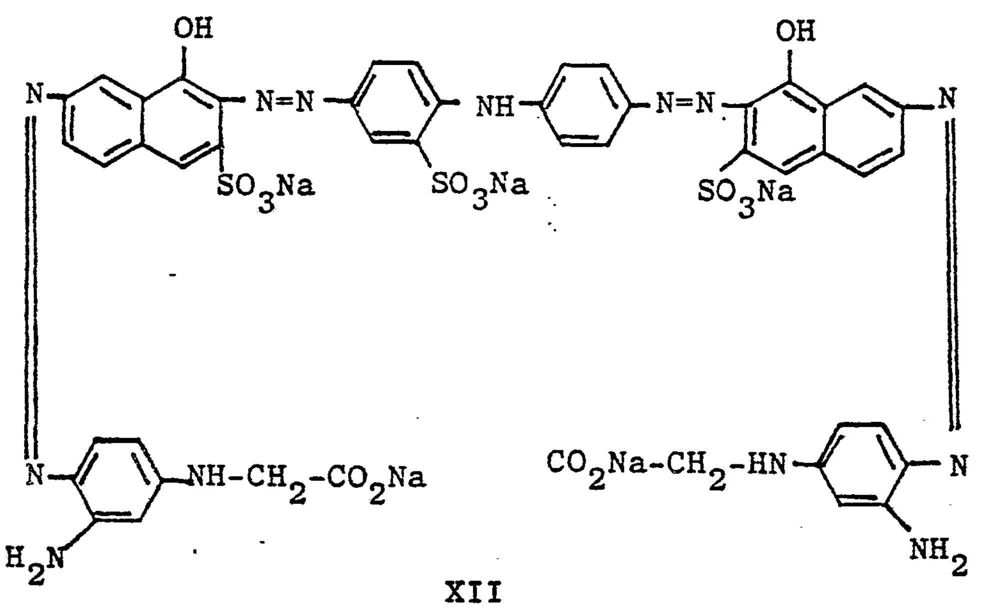

XII

werden unter Rühren bei 20°C in eine Lösung von 15 ml 10n-Natronlauge in 990 ml Wasser eingetragen. Der Farbstoff läßt sich in dem alkalischen Medium hervorragend anrühren und ist nach kurzem Nachrühren bei 20°C vollständig gelöst. Die Färbeflotte weist einen pH-Wert von 13 auf und eignet sich hervorragend zum Färben von Cellulosefasern nach teil- und insbesondere vollkontinuierlichen Färbeprozessen in tiefschwarzen Farbtönen.

Der Handelsfarbstoff der Formel XII besitzt ohne Laugezusatz eine deutlich schlechtere Löslichkeit.

Beispiel 2:

60 g eines 33%igen, handelsüblichen Pulverfarbstoffs von CI Direct Black 32 werden bei 20°C unter Rühren in eine Mischung von 10 ml 10n-Natronlauge in 990 ml Wasser eingetragen. Der Farbstoff ist sehr gut anrührbar und nach kurzem Nachrühren bei 20°C und pH 13 gelöst. Die so erhaltene Färbeflotte eignet sich hervorragend zum Foulardieren von Cellulosefasern und zum Färben nach halb- und insbesondere vollkontinuierlichen Färbeverfahren.

Der verwendete Handelsfarbstoff weist ohne Zugabe von Natronlauge eine deutlich schlechtere Wasserlöslichkeit auf.

Beispiel 3:

50 g eines 27%igen Pulverfarbstoffs der Formel

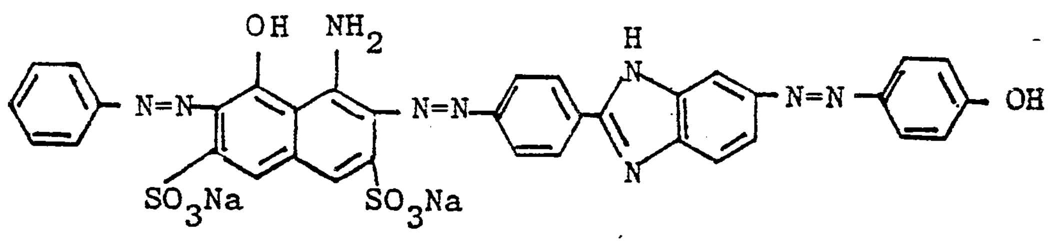

werden bei 20°C in 996 ml Wasser und 4 ml 10n-Natronlauge eingetragen. Bei guter Anrührbarkeit ist der grüne Direkt-Farbstoff in kurzer Zeit bei 20°C gelöst. Die erhaltene Färbeflotte weist einen pH-Wert von 12,4 auf, und sie ist sehr gut zum Färben von Regeneratcellulose und Baumwolle in dunkelgrünen Farbtönen nach teil- und vollkontinuierlichen Färbeprozessen geeignet.

Ohne Natronlauge-Zusatz weist der Farbstoff eine deutlich schlechtere Löslichkeit auf.

Beispiel 4:

80 g eines 51%igen Pulverfarbstoffs eines Gemisches der Farbstoffe der Formeln

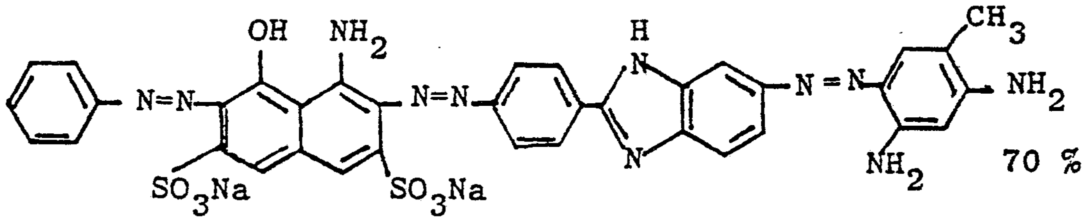

70 %

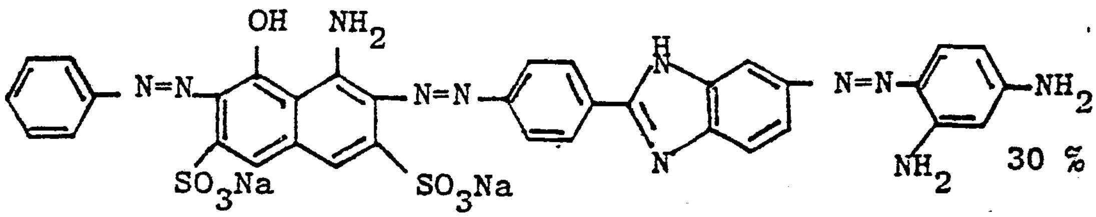

30 %

im angegebenen Mol-Verhältnis werden in eine Lösung von 4 ml 10n-Natronlauge in 996 ml Wasser eingetragen. Der Pulverfarbstoff ist sehr gut anrührbar und nach kurzem Nachrühren bei 20°C und einem pH-Wert von 12,2 gelöst. Die erhaltene Färbeflotte, die nicht zum Gelieren neigt, eignet sich sehr gut zum Färben von Cellulosefasern nach teil- und insbesondere vollkontinuierlichen Färbeprozessen, wobei tiefschwarze Färbungen erhalten werden.

Ohne Laugezusatz ist der Farbstoff deutlich schlechter löslich und weist eine deutlich schlechtere Anrührbarkeit auf.

<u>Beispiel 5:</u>

25 g eines handelsüblichen Pulverfarbstoffs von CI Direct Red 79 werden unter Rühren in eine Mischung von 230 ml Triäthylenglykol, 756 ml Wasser und 14 ml 10n-Natronlauge eingetragen und bei 20°C und pH 13 gelöst. Die Färbeflotte ist gut geeignet zum Färben von Cellulosefasern nach dem Ausziehverfahren sowie teil- und vollkontinuierlichen Färbeverfahren.

Ohne Laugezusatz ist dieser Handelsfarbstoff deutlich schlechter löslich.

Weitere handelsübliche Direktfarbstoffe, die sich unter deutlicher Verbesserung der Löslichkeit bei pH-Werten gleich oder größer als 11,5 lösen und deren stark alkalische,

wäßrige Färbeflotten sich hervorragend zur Durchführung des erfindungsgemäßen Färbeverfahrens bei pH-Werten gleich oder größer als 11,5 eignen, sind beispielsweise : CI Direct Black 19, CI Direct Black 51, CI Direct Blue 84, CI Direct Blue 214, CI Direct Blue 1, CI Direct Blue 15.

Beispiel 6:

153 g Reinfarbstoff der Formel

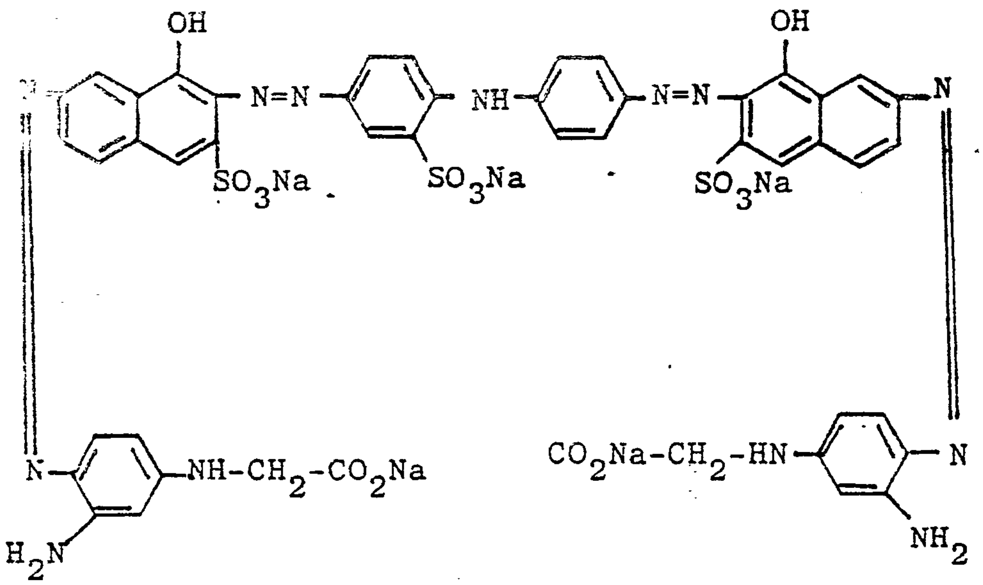

werden in eine Mischung von 1,3 g HUMECTOL C hochkonzentriert (synthetisches Netzmittel der CASSELLA AG, Frankfurt/Main-Fechenheim), 60 ml konzentrierte Natronlauge und 250 g Triäthylenglykol eingerührt, bei 30 - 40°C gelöst und mit Wasser auf 1000 ml aufgefüllt. Man erhält eine dünnflüssige konzentrierte Farbstoffstammlösung vom pH 13.

150 g dieser Stammlösung werden mit Wasser auf 1000 ml verdünnt. Mit dieser Klotzflotte, die einen pH-Wert von 12,5 zeigt, wird Baumwollsamt mit einer Flottenaufnahme von 100 % bei 20 - 30°C foulardiert, 1 Minute bei 102°C gedämpft, danach bei 20 - 30°C gespült, mit Essigsäure neutralisiert und nochmals gespült. Man erhält ein Schwarz.

Zur Erzielung des gleichen Schwarz benötigt man nach dem bisher üblichen Verfahren 50 g COTONEROL BRC hochkonzentriert (im Handel befindlicher Pulverfarbstoff nach

obiger Formel). Da der Farbstoff bei 30°C mit 50 g/l die Löslichkeitsgrenze überschreitet, ist ein Vergleich nur bei 60°C möglich. Bei dieser Temperatur liegt der Pulverfarbstoff knapp unter der Löslichkeitsgrenze.
Zur Erzielung der gleichen Farbtiefe wie mit der beschriebenen alkalischen Farbstofflösung ist eine längere Dämpfzeit von ca. 3 Minuten bei 102°C erforderlich.

Beispiel 7:

15,1 g Reinfarbstoff CI Direct Black 22 werden in ein Gemisch von 12 ml konzentrierter Natronlauge, 40 g Triäthylenglykol und 0,25 g HUMECTOL C hochkonzentriert eingerührt, bei 30 - 50°C gelöst und mit Wasser auf ein Endgewicht von 210 g eingestellt. Man erhält eine dünnflüssige, stark alkalische Farbstoffstammlösung vom pH 13.

120 g der Farbstoffstammlösung werden mit Wasser auf 1000 ml verdünnt. Mit dieser Klotzflotte (pH = 12,4) wird Baumwollköper bei 20°C foulardiert, 1 Minute bei 102°C gedämpft, gespült und mit Essigsäure neutralisiert und nochmals gespült. Es resultiert ein volles Schwarz.

Zur Erzielung gleicher Farbtiefe wurden nach dem herkömmlichen Verfahren 50 g/l COTONEROL AC extra konz. (Handelsfarbstoff CI Direct Black 22) benötigt. Mit 50 g/l wird die Löslichkeit jedoch weit überschritten, so daß kontinuierliche Färbungen zu Fehlergebnissen führen.

Beispiel 8:

18 g Reinfarbstoff CI Direct Black 32 werden in eine Mischung von 12 ml konzentrierter Natronlauge, 0,25 ml HUMECTOL C hochkonzentriert und 40 g Triäthylenglykol eingerührt, bei 30 - 50°C gelöst und mit Wasser auf ein Endgewicht von 200 g eingestellt. Man erhält eine dünnflüssige Farbstoffstammlösung vom pH 12,8.

120 g dieser Stammlösung werden mit Wasser auf 1000 ml verdünnt. Mit dieser Klotzflotte vom pH = 12,2 wird Baumwollgewebe geklotzt, 1 Minute bei 102°C gedämpft und wie nach Beispiel 7 fertiggestellt. Das erhaltene Schwarz läßt sich nach dem bisher üblichen Verfahren mit dem entsprechenden Handelsfarbstoff COTONEROL BC ex. konz. nicht im Kontinueverfahren imitieren, da seine Löslichkeitsgrenze unter den benötigten 60 g/l liegt.

Beispiel 9:

Aus einem im Handel erhältlichen Pulverfarbstoff der Formel

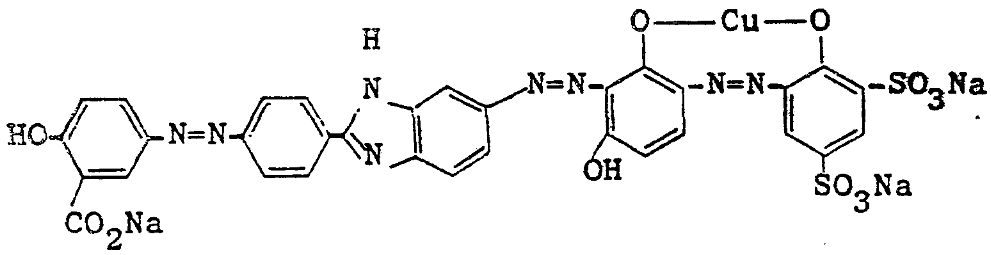

der mit 10 Gew.% Soda eingestellt ist, wird eine Färbeflotte hergestellt, die im Liter 60 g Farbstoff enthält. Diese Färbeflotte wird ohne und mit steigenden Mengen Natronlauge von 38°Bé auf Baumwollgewebe nach dem Klotz-Dämpfverfahren gefärbt. Dabei wird bei 20 bis 30°C geklotzt und bei 102°C gedämpft, dann wird gespült, mit Essigsäure neutralisiert und nochmals gespült. Es wurden folgende Ergebnisse erhalten:

| Versuch | ml/l Natronlauge 38°Bé | pH-Wert der Flotte | Dämpfzeit in Minuten | Coloristische Farbstärke* |
|---|---|---|---|---|
| a | 0 | 10,9 | 1 | 100 |
| b | 0 | 10,9 | 3 | 90 |
| c | 10 | 12,8 | 1 | 85 |
| d | 10 | 12,8 | 3 | 80 |
| e | 20 | 13,1 | 1 | 80 |
| f | 20 | 13,1 | 3 | 70 |

* eine kleinere Zahl zeigt eine höhere Farbstärke an.

Bei den Versuchen c bis f werden, wie die Zahlen in der vorletzten und letzten Spalte der vorstehenden Tabelle zeigen, deutlich farbstärkere Färbungen erhalten, bzw. die Fixierung wird deutlich beschleunigt.

P A T E N T A N S P R Ü C H E

1. Verfahren zum Färben und Bedrucken von hydroxylgruppenhaltigen, natürlichen oder synthetischen Fasermaterialien, dadurch gekennzeichnet, daß bei dem Färbeprozeß eine wäßrige Färbeflotte und bei dem Druckprozeß eine wäßrige Druckpaste eines alkalistabilen, metallfreien oder metallhaltigen Monoazo-, Disazo-, Tris- und Polyazodirektfarbstoffs, der mindestens eine, in der Regel 1 bis 4, vorzugsweise 2 bis 3, aromatische Hydroxyl- und/oder Enolgruppe und zusätzlich mindestens eine, in der Regel 1 bis 6, vorzugsweise 2 bis 5, wasserlöslich machende Gruppe enthält, mit einem pH-Wert von gleich oder größer als 11,5 verwendet wird.

2. Verfahren nach Anspruch 1, dadurch gekennzeichnet, daß der pH-Wert der Färbeflotte oder Druckpaste 12 bis 13,1 beträgt.

3. Verfahren nach den Ansprüchen 1 bis 2, dadurch gekennzeichnet, daß die Färbeflotte oder Druckpaste einen Azofarbstoff mit 1 bis 4 aromatischen Hydroxyl- und/oder Enolgruppen und 1 bis 6 wasserlöslich machenden Gruppen enthält.

4. Verfahren nach den Ansprüchen 1 bis 3, dadurch gekennzeichnet, daß die Färbeflotte oder Druckpaste einen Azofarbstoff enthält, der als wasserlöslich machende Gruppen Carboxy- und/oder Sulfogruppen enthält.

5. Verfahren nach den Ansprüchen 1 bis 4, dadurch gekennzeichnet, daß die Färbeflotte oder Druckpaste einen Azofarbstoff mit 2 bis 3 aromatischen Hydroxyl- und/oder Enolgruppen enthält.

6. Verfahren nach den Ansprüchen 1 bis 5, dadurch gekennzeichnet, daß die Färbeflotte oder Druckplaste einen Azofarbstoff mit 2 bis 5 wasserlöslich machenden Gruppen enthält.

7. Verfahren nach den Ansprüchen 1 bis 6, dadurch gekennzeichnet, daß der pH-Wert gleich oder größer als 11,5 mit einem tertiären Alkaliphosphat und/oder Alkalimetasilikat und/oder Alkalihydroxid eingestellt wird.

8. Verfahren nach den Ansprüchen 1 bis 7, dadurch gekennzeichnet, daß es kontinuierlich durchgeführt wird.

9. Verfahren nach den Ansprüchen 1 bis 8, dadurch gekennzeichnet, daß es nach dem Klotzverfahren oder nach dem Klotz-Salz-Verfahren durchgeführt wird.

10. Verfahren nach den Ansprüchen 1 bis 9, dadurch gekennzeichnet, daß die Farbflotte oder Druckpaste einen Monoazodirektfarbstoff mit einer aromatischen Hydroxyl- oder Enolgruppe und einer oder zwei wasserlöslich machenden Gruppen und/oder einen Disazodirektfarbstoff mit mindestens 2, insbesondere 2 bis 4, aromatischen Hydroxyl- und/oder Enolgruppen und 2 bis 4 wasserlöslich machenden Gruppen und/oder einem Trisazofarbstoff mit mindestens einer, insbesondere 1 oder 2, aromatischen Hydroxyl- und/oder Enolgruppe und 2 bis 4, insbesondere 2 oder 3 wasserlich machenden Gruppen und/oder einen Tetrakisazodirektfarbstoff mit mindestens einer, insbesondere 1 bis 4, aromatischen Hydroxyl- und/oder Enolgruppe und mindestens 2, insbesondere 2 bis 5, wasserlöslich machenden Gruppen enthält.